# EUROPEAN PATENT SPECIFICATION

(11) **EP 3 196 506 B1**
(45) Date of publication and mention of the grant of the patent: **17.04.2019**
(21) Application number: 16075019.6
(22) Date of filing: 21.12.2016
(51) Int. Cl.: F16G 5/16

(54) **DRIVE BELT WITH A SET OF NESTED STEEL FLEXIBLE RINGS**
TREIBRIEMEN MIT EINEM SATZ VON VERSCHACHTELTEN FLEXIBLEN STAHLRINGEN
COURROIE D'ENTRAÎNEMENT AYANT UN ENSEMBLE DE BAGUES SOUPLES EN ACIER IMBRIQUÉES

(30) Priority: 30.12.2015 NL 1041657
(43) Date of publication of application: 26.07.2017
(73) Proprietor: Robert Bosch GmbH, 70442 Stuttgart (DE)
(72) Inventor: Jonkers, Joost Johannes Cornelis, 5126BH Gilze (NL); Prinsen, Lucas Hendricus Robertus Maria, 5121EJ Rijen (NL)
(74) Representative: Plevier, Gabriël Anton Johan Maria

(56) References cited:
- EP-A2- 1 691 108
- JP-U- S 607 348

## Description

The present invention relates to a drive belt for use in the well-known pulley-type continuously variable transmission or CVT that is typically applied in motor vehicles for transmitting power, generated by the engine of the motor vehicle to the driven wheels thereof, at a variable speed/torque ratio. In the transmission the drive belt is arranged around two pulleys that each include a pair of conical discs defining a tapered circumferential groove wherein a respective circumference part of the drive belt is located while being clamped by and between the pulley discs.

One well-known type of drive belt is described in detail in EP 1 216 366 A1, which particular belt-type is referred to in the art as the pushbelt. This known drive belt includes multiple steel transverse segments that are each provided with at least one, but typically two recesses, wherein in each case a circumference part of a set of a number of mutually, concentrically nested flexible steel rings of the drive belt is accommodated. In the art, the transverse segments are also referred as transverse elements or members, the rings as hoops, loops or bands and the ring set or ring sets as endless carrier. In the known drive belt, the transverse segments are not connected to the ring set, but rather can slide along the circumference thereof, while being constrained thereby in the axial and radial directions perpendicular thereto.

It is known that in a transmission of this type the transverse elements, at the location of the two pulleys, i.e. where they are clamped between the sheaves of the pulleys, are subject to a radially outwardly directed force which is supported as a normal force on the radially innermost ring of the ring set, so that a tensile force is generated therein. On account of this tensile force, the radially innermost ring will elongated, i.e. stretch. However, such stretching of the radially innermost ring is counteracted by the presence of the next ring in the respective set of rings, i.e. the ring which is next to the innermost ring. As a result, the said normal force will partially also be supported on such next ring, and consequently a tensile force is generated therein as well. This play of forces propagates through the entire ring set until all rings thereof are tensioned, each taking a share in carrying the overall belt tension.

In this latter respect, EP 1 216 366 A1 teaches that the total belt tension will be equally distributed between the rings of the ring set, if these rings are mutually nested without any clearance existing there between in radial direction. In this case, the normal forces acting on the respective rings decrease uniformly from the level of the radial force on the radially inwardly facing surface, i.e. the inner side, of the innermost ring, to zero on the radially outwardly facing surface, i.e. the outer side, of the radially outermost ring of the ring set. In the practice of mass-manufacturing rings, ring sets and drive belts it is virtually impossible, or at least very costly to apply zero radial clearance between each pair of adjacent rings in the ring set(s) of the drive belt. Therefore, in practice some (small amount of) positive radial clearance is allowed between the adjacent rings.

It is also known in the art to lower the tension force in the radially innermost ring and the radially outermost ring of the ring set relative to the other rings of the ring set, to compensate for the extra contact stress these innermost and outermost rings receive from their contact with the transverse segments. In particular in this respect, a small negative clearance is applied between the radially innermost ring pair of the ring set to reduce the tension force in the radially innermost ring and a large positive clearance is applied between the radially outermost ring pair of the ring set to reduce the tension force in the radially outermost ring, at least relative to the clearances applied between the other pairs of adjacent rings of the ring set.

Further, JP S60 7348 U discloses a drive belt wherein the clearance between the ring pairs gradually decreases from the radially innermost pair towards the radially outermost ring pair of the ring set. Moreover, EP 1 691 108 A2 specifically relates to the manufacturing of the drive belt. This latter document teaches to set the clearance between the ring pairs of the ring set in manufacturing in a range from negative to positive from the radially innermost ring up to a middle ring of the ring set and in a range from zero to positive, i.e. to set only positive clearances, from the middle ring until the radially outermost ring of the ring set. According to EP 1 691 108 A2 this manufacturing method realises that good lubricating conditions can be maintained.

Within the context of the present disclosure the radial clearance between a pair of adjacent rings of the ring set is defined as the difference in the outer circumferential length of the radially enclosed, i.e. inner ring of the ring pair and of the inner circumferential length of the radially enclosing, i.e. outer ring of the ring pair divided by 2 times pi (2π). In terms of this definition, a typical nominal, i.e. production average value for the radial clearance is 3 micron plus or minus a tolerance of 7 micron, at least for rings having a thickness in the range from 100 to 300 micron, more specifically in the range from 150 to 200 micron and having a circumference length in the range from 500 to 1000 millimetre. However, preferably only positive radial clearances are allowed between the pairs of adjacent rings of the ring set, e.g. from 0 to 10 micron with a nominal or manufacturing average value of the radial clearance lying essentially in the middle of such tolerance window. In this latter case the ring set can be assembled from individual rings relatively easily.

During operation, the individual rings of the ring set can -and in practice will-slide relative to one another along the circumference direction thereof. This relative motion or slip of the rings in the rings set is geometrically determined, because the rings operate at slightly different transmission ratios in the transmission because each ring has a unique radial position within the ring set at the transmission pulleys. Although such ring slip is not detrimental to the functioning of the drive belt per se, it does cause some power loss due to friction between the adjacent rings. This power loss between each pair of adjacent rings of the ring set is determined by the product of the locally prevailing normal force in the sliding contact between the adjacent rings and a coefficient of friction in such contact that in turn depends on several parameters such as contact pressure, slip speed etc. Although this power loss due to friction seems unavoidable in the present type drive belt, a reduction thereof can still be realised according to the present disclosure, at least on average during operation of the drive belt in the transmission.

According to the present disclosure, the above object is realised by applying a radial clearance between at least one of the pairs of adjacent rings of the ring set other than a radially innermost ring pair and a radially outermost ring pair that is considerably larger, e.g. at least by a factor of two on average, than the radial clearance applied between a further ring pair thereof, i.e. other than the said radially innermost and outermost ring pairs. In particular in accordance to the present disclosure, in mass manufacture, a nominal value of such larger radial clearance between the said at least one ring pair of the drive belt is defined to exceed the nominal radial clearance applied between the said further ring pair thereof, by at least the tolerances applied to such nominal values. Thus for the above-mentioned typical radial clearance of 5 micron and for the typical manufacturing tolerance of 5 micron for such clearance, the said at least one pair of adjacent rings is provided with a nominal radial clearance of at least 15 micron plus or minus 5 micron.

When the transmission provided with the drive belt in accordance with the present disclosure is loaded only partly relative to a maximum possible load thereof, the clamping forces exerted by the pulleys onto the drive belt remain relatively low, such that the tensioning of the ring set remains relatively low as well. In case the rings of the ring set are mutually nested without any radial clearance existing there between in radial direction, the ring set is still tensioned as a whole, even by such low tensioning thereof and a normal force is present between all pairs of adjacent rings thereof, as well as the friction losses associated therewith. However, on account of the larger radial clearance between the at least one pair of adjacent rings of the ring set in accordance with the present disclosure, only a part of the rings of the ring set, i.e. those located radially inward of the larger radial clearance, are tensioned by the said low pulley clamping force. Therefore, effectively no normal force and favourably no friction losses occur between the rings of the ring set that are located radially outward of the larger radial clearance. Put alternatively, according the present disclosure, the drive belt and in particular the ring set thereof is designed such that, at a defined partial loading of the transmission, an elongation of the rings located radially inward of the larger radial clearance, due to the pulley clamping force, does not bridge, i.e. close such clearance, whereby the rings located radially outward of the larger radial clearance are neither tensioned, nor receive a normal force and thus do not, or least hardly, generate friction losses.

As the transmission load increases, also the clamping forces are raised as part of the normal transmission operation, until at some point, the larger radial clearance between the said at least one pair of adjacent rings is bridged by the elongation of the radially inner ring of such ring pair. From this transmission load upwards, the radially outer ring of the respective ring pair is also tensioned and starts to carry a part of the load. Obviously, the ring set as a whole is designed such that, at maximum transmission load, all rings thereof are tensioned and take their respective share in carrying such load.

Preferably, according to the present disclosure, at least a number of radially inner ring pairs of the ring set are provided with the conventional, relatively small radial clearance, with the larger radial clearance in accordance with the present disclosure only being provided between the adjacent rings more towards the radial outside of the ring set. In particular, if the ring set comprises a number N of individual rings, the innermost 30% to 40% rings thereof are preferably mutually nested with the conventional, relatively small radial clearance, whereas at least one pair of the remaining rings of the ring set, other than the outermost ring pair thereof, is then provided with the relatively large radial clearance. More in particular in this respect, if the ring set for example comprises 12 rings it can be divided into 3 groups of 4 rings each, by providing the larger radial clearance between the 4^{th} and 5^{th} rings of the ring set (as e.g. counted in radial outward direction) and between the 8^{th} and 9^{th} rings of the ring set. In this case, at lower transmission loads only the first four inner rings of the ring set are tensioned and the friction losses between the rings are minimised. At an average loading of the transmission eight rings take part carrying the total belt tension and at the highest transmission loads all rings take part in carrying the maximum belt tension.

Within the above-described context it might seem feasible, even favourable, to apply the larger radial clearance between all adjacent rings in the ring set. However, according to the present disclosure this will compromise the longevity of, at least, the radially innermost ring of the ring set. After all, this innermost ring will be additionally tensioned relative to the outermost ring of the ring set when being increasingly stretched to close the clearance gaps between all rings of the ring set. Thus, it is favourable to combine the larger radial clearance, applied between the at least one pair of adjacent rings of the ring set in accordance with the present disclosure, with a relatively small nominal radial clearance and tolerance value applied between the remaining pairs of adjacent rings of the ring set.

The above discussed principles and features of the novel transverse element and its proposed manufacturing method will now be elucidated further along a drawing in which:
Figure 1 provides a schematically depicted example of the well-known continuously variable transmission provided with two pulleys and a drive belt;
Figure 2 provides a schematically depicted cross-section of the known drive belt incorporating steel transverse elements and a ring set;
Figure 3 schematically illustrates the parameter of radial clearance between a two adjacent rings or ring pair in the ring set of the drive belt;
Figure 4 is a graph of the nominal and the tolerance values for the radial clearance between the pairs of adjacent rings in the ring set of the drive belt that is commonly applied in the art;
Figure 5 is a graph of the nominal and the tolerance values for the radial clearance between the pairs of adjacent rings in the ring set according to a possible embodiment of the drive belt within the scope of the present disclosure; and
Figure 6 is a graph illustrating the load-share per ring in the ring set for several ring sets.

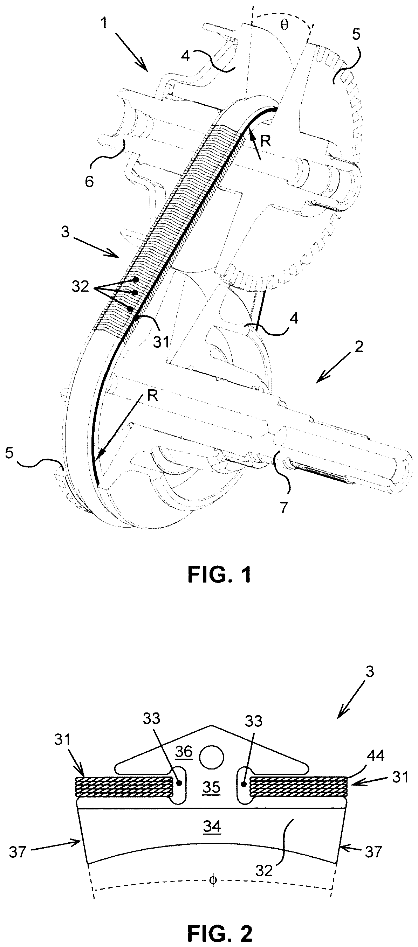

Figure 1 shows the central parts of a known continuously variable transmission or CVT that is commonly applied in the drive-line of motor vehicles between the engine and the driven wheels thereof. The transmission comprises two pulleys 1, 2 that are each provided with a pair of conical pulley discs 4, 5 mounted on a pulley shaft 6 or 7, between which pulley discs 4, 5 a predominantly V-shaped circumferential pulley groove is defined. At least one pulley disc 4 of each pair of pulley discs 4, 5, i.e. of each pulley 1, 2, is axially moveable along the pulley shaft 6, 7 of the respective pulley 1, 2. A drive belt 3 is wrapped around the pulleys 1, 2, located in the pulley grooves thereof for transmitting a rotational movement and an accompanying torque between the pulley shafts 6, 7.

The transmission generally also comprises activation means that -during operation- impose on the said axially moveable pulley disc 4 of each pulley 1, 2 an axially oriented clamping force that is directed towards the respective other pulley disc 5 of that pulley 1, 2, such that the drive belt 3 is clamped between these discs 4, 5 of the pulleys 1, 2. These clamping forces not only determine a friction force between the drive belt 3 and the respective pulleys 1, 2, but also a radial position R of the drive belt 3 at each pulley 1, 2 between the pulley discs 4, 5 thereof, which radial positions R determine a speed ratio of the transmission between the pulley shafts 6, 7 thereof.

An example of a known drive belt 3 is shown in more detail in figure 2, in a cross-section thereof facing in the circumference direction of the drive belt 3. The drive belt 3 is shown to incorporate two sets 31 of flat and thin, i.e. of ribbon-like, flexible metal rings 44 that are mutually nested to form the ring sets 31. In figure 2 each such ring set 31 is shown to consist of 5 individual rings 44, however in practice mostly 6, 9, 10 or 12 rings 44 are applied per ring set 31. The drive belt 3 further comprises a number of transverse elements 32 that are mounted on the ring sets 31 along the circumference thereof. Each ring set 31 is received in a respective recess or slot 33 defined by the transverse elements 32 on either lateral side thereof, i.e. on either axial side of a central part 35 of the transverse elements 32. The slots 33 of the transverse element 32 are located in-between a bottom part 34 and a top part 36 of the transverse element 32, as seen in radial direction relative to the drive belt 3 as a whole. On the axial sides of the said bottom part 34 thereof, the transverse elements 32 are provided with contact faces 37 for arriving in friction contact with the pulley discs 4, 5.

During operation the transverse elements 32 take-up the pulley clamping forces through their respective contact faces 37 that are mutually oriented at an angle φ that essentially matches an angle θ of the V-shaped pulley grooves, such that the transverse elements 32 are urged in radially outward direction by the application of the pulley clamping force, whereby the ring sets 31 are tensioned. As a result of such tensioning of the ring set 31 in combination with the relative motion that naturally occurs between the individual rings 44 of the ring set 31 during operation, friction losses are generated in the contact between the pairs of adjacent rings 44 in the ring set 31.

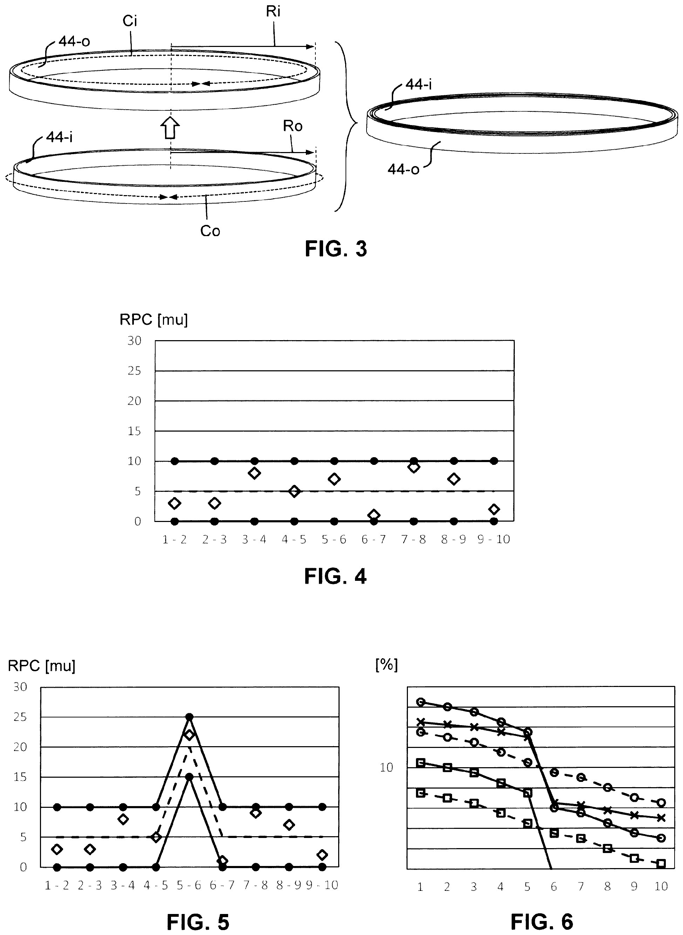

Although the individual rings 44 of the ring sets are nested, i.e. concentrically fitted with a minimal tolerance, some clearance is normally present the adjacent rings 44 in the ring set 31, i.e. between each pair of a radially inner ring 44-i and a radially outer ring 44-o within the ring set 31. The presently relevant definition of such clearance is defined with reference to figure 3, as follows. In figure 3 a respectively radially inner ring 44-i is shown to be provided with an outer circumference Co that is somewhat smaller than an inner circumference Ci of a respectively radially outer ring 44-o. When these two rings 44-i and 44-o are mutually nested, some positive clearance will thus be presented there between. Such ring pair clearance RPC is defined in radial direction with the rings positioned in a circular posture, as the difference between the inner radius Ri of the radially outer ring 44-o and the outer radius Ro of the radially inner ring 44-i.

The graph of figure 4 provides an example of the ring pair clearance RPC as it might be applied in practice the assembly of the ring set 31 from individually (semi-)manufactured rings 44. On the horizontal axis of the graph in figure 4, the successive pairs of adjacent rings 44 of the ring set 31 including ten rings 44 in total are listed, starting with a first ring pair 1-2 constituted by the radially innermost and the radially innermost but one ring 44 of the ring set 31 and ending with a ninth and final ring pair 9-10 constituted by the radially outermost and the radially outermost but one ring 44 of the ring set 31. The vertical axis of the graph in figure 4 represents numeric value of the ring pair clearance RPC in microns and the diamond-shaped markers thus indicate such the ring pair clearance RPC for each one of the nine pairs of adjacent rings 44 of the ring set 31. Furthermore in the graph of figure 4, a tolerance band is indicated by and between the two solid lines that represent an upper and a lower tolerance limit for the ring pair clearance RPC with a production average or nominal value for the ring pair clearance RPC indicated by the dashed line in figure 4.

Because of the said (positive) clearances between the rings 44 of the ring set 31, the ring tension decreases from being the highest in the innermost ring 44, i.e. ring number 1, to being the lowest in the radially outermost ring 44 thereof, i.e. ring number 10. Thus, at maximum transmission load, the said ring number 1 carries more than 10% of the total ring set tension and the said ring number 10 carrier less than 10% thereof. This feature is illustrated in the graph of figure 6 by the dashed line with the circular markers. On the horizontal axis the rings 44 are listed from ring number 1 to ring number 10 and on the vertical axis the ring tension is indicated as a percentage of the maximum tension of the ring set 31 as a whole, i.e. the ring set tension that occurring at maximum transmission load.

At partial loading of the transmission, the tension in the rings 44 decreases, as indicated by the dashed line with the square markers in figure 6 for a transmission load of about 40% of the said maximum ring tension. According to the present disclosure the power transmitting efficiency of the transmission can be improved in these conditions. More in particular the friction losses between the adjacent rings 44 of the ring set 31 can be reduced, by reducing the number of rings 44 that is actually tensioned at such partial transmission load. According to the present disclosure this is achieved by applying a relatively large clearance between at least one pair of adjacent rings 44, such that the rings 44 of the ring set 31 that are located beyond, i.e. radially outward of such relatively larger clearance are not tensioned at a partial transmission load. Instead, the ring set 31 tension resulting from such partial transmission load is carried only by the rings 44 of the ring set 31 located radially inward of such relatively larger clearance, such that the said friction losses occur only between these latter rings 44.

In figure 5 this novel feature of the ring set 31 in accordance with the present disclosure is illustrated by means of a graph similar to that of figure 4. In particular in the embodiment example of figure 5, the ring pair clearance RPC between the fifth and the sixth ring 44, i.e. of the fifth ring pair 5-6 of the ring set 31 is set within the range between 15 and 25 micron, whereas the ring pair clearance RPC of the remaining pairs of adjacent rings 44 of the ring set 31 is set within the aforementioned range between 0 and 10 micron. Thus the production average of the single, relatively large ring pair clearance RPC of the fifth ring pair 5-6 is four times as large as the average ring pair clearance RPC of the other ring pairs. As illustrated in figure 6 by the solid line with the square markers, the ring set 31 tension resulting from such partial transmission load is carried only by the five rings 44 of the ring set 31 located radially inward of the relatively larger clearance between the fifth and the sixth ring 44, such that favorably no, or at least less, friction losses occur between the other rings 44.

As a consequence of such larger clearance, the ring tension will be higher at the said maximum transmission load for the five radially inner rings 44 of the ring set 31, as illustrated by the solid line with the round markers in figure 6, at least in comparison with the ring tension for five radially inner rings 44 of the ring set 31 without such larger ring pair clearance RPC between the fifth and the sixth ring 44, i.e. of the fifth ring pair 5-6 of the ring set 31, thereof (fig. 6, dashed line with round markers). However, this effect can be minimized by applying a relatively small ring pair clearance RPC between all ring pairs of the ring set 31 except the said fifth ring pair 5-6. For example, in figure 6 the solid line with the cross markers indicates the resulting ring tension at maximum transmission load when applying half the ring pair clearance RPC of the known drive belt 3. Also, by applying the relatively large clearance for more than one pair of adjacent rings 44, the ring set 31, a similar reduction of the said friction losses can be realized with a smaller difference between such relatively large ring pair clearance RPC and the average ring pair clearance RPC of the other ring pairs.

According to the present disclosure, the said at least one pair of rings 44, where between the said relatively larger clearance is provided, is located in or near the middle of the ring set 31, i.e. of all rings 44 thereof. In particular, in case the ring set 31 is composed of between 9 and 12 radially nested individual rings 44, at least 3, at most 6 and preferably 4 or 5 rings 44 are located radially inside the said at least one pair of rings 44 provided with the said relatively large clearance. Further, according to the present disclosure, the said at least one pair of rings 44, where between the said relatively larger clearance is provided, is neither an radially innermost pair of rings 44 of ring set 31, nor a radially outermost pair of rings 44 thereof. In this manner an overloading, i.e. over-tensioning of at least the radially innermost ring 44 is favourably avoided.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. A method for mass manufacturing drive belts (3), each with a number of transverse elements (32) that are arranged slideably on a ring set (31) of the drive belt (3), which ring set (31) comprises a number flexible steel rings that are mutually stacked in radial direction, wherein between each pair (44-i, 44-o) of two adjacent rings (44) in the ring set (31) a clearance in radial direction (RPC) is defined as the difference between a length of an inner circumference (Ci) of a radially outer ring (44-o) of a respective ring pair (44-i, 44-o) and a length of an outer circumference (Co) of a radially inner ring (44-i) of that ring pair (44-i, 44-o), **characterized in that** between at least one of the pairs (44-i, 44-o) of adjacent rings (44) of the ring set (31) other than a radially innermost ring pair (44-i, 44-o) and a radially outermost ring pair (44-i, 44-o) thereof, a positive radial clearance is nominally applied in mass manufacturing that is at least a factor 2 larger than a positive radial clearance that is nominally applied in mass manufacturing between a further ring pair (44-i, 44-o) thereof, i.e. other than the said radially innermost and outermost ring pairs (44-i, 44-o).

2. A method for mass manufacturing drive belts (3), each with a number of transverse elements (32) that are arranged slideably on a ring set (31) of the drive belt (3), which ring set (31) comprises a number flexible steel rings that are mutually stacked in radial direction, wherein between each pair (44-i, 44-o) of two adjacent rings (44) in the ring set (31) a clearance in radial direction (RPC) is defined as the difference between a length of an inner circumference (Ci) of a radially outer ring (44-o) of a respective ring pair (44-i, 44-o) and a length of an outer circumference (Co) of a radially inner ring (44-i) of that ring pair (44-i, 44-o), **characterized in that** between at least one of the pairs (44-i, 44-o) of adjacent rings (44) of the ring set (31) other than a radially innermost ring pair (44-i, 44-o) and a radially outermost ring pair (44-i, 44-o) thereof, a positive radial clearance is nominally applied in mass manufacturing that exceeds a positive radial clearance that is nominally applied in mass manufacturing between a further ring pair (44-i, 44-o) thereof, i.e. other than the said radially innermost and outermost ring pairs (44-i, 44-o), by at least a tolerance window that is applied to these respective nominal clearance values.

3. The method for mass manufacturing drive belts (3) according to claim 1 or 2, **characterized in that** the ring set (31) comprises a number N of individual rings (44) and **in that** the two rings (44) of the said at least one pair (44-i, 44-o) of adjacent rings (44) with the larger positive radial clearance do not belong to the radially inner 30%, preferably 40% of the N rings (44) of the ring set (31).

4. The method for mass manufacturing drive belts (3) according to claim 3, **characterized in that** the said at least one pair (44-i, 44-o) of adjacent rings (44) with the larger positive radial clearance includes the middle ring (44) or middle rings (44) of the ring set (31).

5. The method for mass manufacturing drive belts (3) according to claim 3, **characterized in that** the ring set (31) comprises 12 individual rings (44) and **in that** the larger positive radial clearance is provided between the 4th and 5th rings (44) and between the 8th and 9th rings (44) of the ring set (31).

## Patentansprüche

1. Verfahren für Massenproduktion von Treibriemen (3), jeweils mit einer Anzahl von Querelementen (32), die verschiebbar auf einem Ringsatz (31) des Treibriemens (3) angeordnet sind, wobei der Ringsatz (31) eine Anzahl flexibler Stahlringe umfasst, die in einer radialen Richtung wechselseitig gestapelt sind, wobei zwischen jedem Paar (44-i, 44-o) zweier benachbarter Ringe (44) in dem Ringsatz (31) ein Abstand in radialer Richtung (RPC) definiert ist als die Differenz zwischen einer Länge eines inneren Umfangs (inner Circumference, Ci) eines radial äußeren Rings (44-o) eines entsprechenden Ringpaares (44-i, 44-o) und einer Länge eines äußeren Umfangs (Co) eines radial inneren Rings (44-i) dieses Ringpaares (44-i, 44-o), **dadurch gekennzeichnet, dass** zwischen mindestens einem der Paare (44-i, 44-o) benachbarter Ringe (44) des Ringsatzes (31), mit Ausnahme eines radial innersten Ringpaares (44-i, 44-o) und eines radial äußersten Ringpaares (44-i, 44-o) davon, in der Massenproduktion nominell ein positiver radialer Abstand angewendet wird, der mindestens um einen Faktor 2 größer als ein positiver radialer Abstand ist, der in der Massenproduktion nominell zwischen einem weiteren Ringpaar (44-i, 44-o) davon angewendet wird, d. h., einem anderen als dem radial innersten und äußersten Ringpaar (44-i, 44-o).

2. Verfahren für Massenproduktion von Treibriemen (3), jeweils mit einer Anzahl von Querelementen (32), die verschiebbar auf einem Ringsatz (31) des Treibriemens (3) angeordnet sind, wobei der Ringsatz (31) eine Anzahl flexibler Stahlringe umfasst, die in einer radialen Richtung wechselseitig gestapelt sind, wobei zwischen jedem Paar (44-i, 44-o) zweier benachbarter Ringe (44) in dem Ringsatz (31) ein Abstand in radialer Richtung (RPC) definiert ist als die Differenz zwischen einer Länge eines inneren Umfangs (inner Circumference, Ci) eines radial äußeren Rings (44-o) eines entsprechenden Ringpaares (44-i, 44-o) und einer Länge eines äußeren Umfangs (Co) eines radial inneren Rings (44-i) dieses Ringpaares (44-i, 44-o), **dadurch gekennzeichnet, dass** zwischen mindestens einem der Paare (44-i, 44-o) benachbarter Ringe (44) des Ringsatzes (31), mit Ausnahme eines radial innersten Ringpaares (44-i, 44-o) und eines radial äußersten Ringpaares (44-i, 44-o) davon, in der Massenproduktion nominell ein positiver radialer Abstand angewendet wird, der einen positiven radialen Abstand, welcher in der Massenproduktion nominell zwischen einem weiteren Ringpaar (44-i, 44-o) davon, d. h., einem anderen als dem radial innersten und äußersten Ringpaar (44-i, 44-o), angewendet wird, um mindestens ein Toleranzfenster überschreitet, das auf diese entsprechenden nominellen Abstandswerte angewendet wird.

3. Verfahren für Massenproduktion von Treibriemen (3) nach Anspruch 1 oder 2, **dadurch gekennzeichnet, dass** der Ringsatz (31) eine Anzahl N von einzelnen Ringen (44) umfasst, und dadurch, dass die zwei Ringe (44) des mindestens einen Paares (44-i, 44-o) von benachbarten Ringen (44) mit dem größeren positiven radialen Abstand nicht zu den radial inneren 30 %, vorzugsweise 40 % der N Ringe (44) des Ringsatzes (31) gehören.

4. Verfahren für Massenproduktion von Treibriemen (3) nach Anspruch 3, **dadurch gekennzeichnet, dass** das mindestens eine Paar (44-i, 44-o) von benachbarten Ringen (44) mit dem größeren positiven radialen Abstand den mittleren Ring (44) oder mittlere Ringe (44) des Ringsatzes (31) beinhaltet.

5. Verfahren für Massenproduktion von Treibriemen (3) nach Anspruch 3, **dadurch gekennzeichnet, dass** der Ringsatz (31) 12 einzelne Ringe (44) umfasst, und dadurch, dass der größere positive radiale Abstand zwischen dem 4. und 5. Ring (44) und zwischen dem 8. und 9. Ring (44) des Ringsatzes (31) vorgesehen ist.

## Revendications

1. Procédé de fabrication en série de courroies d'entraînement (3), chacune possédant un certain nombre d'éléments transversaux (32) qui sont disposés de façon coulissante sur un jeu d'anneaux (31) de la courroie d'entraînement (3), lequel jeu d'anneaux (31) comprend un certain nombre d'anneaux en acier flexible qui sont mutuellement empilés dans la direction radiale, dans lequel entre chaque paire (44-i, 44-o) de deux anneaux adjacents (44) dans le jeu d'anneaux (31), un espacement dans la direction radiale (RPC) est défini en tant que différence entre une longueur d'une circonférence interne (Ci) d'un anneau extérieur radial (44-o) d'une paire d'anneaux respective (44-i, 44-o) et une longueur d'une circonférence externe (Co) d'un anneau intérieur radial (44-i) de cette paire d'anneaux (44-i, 44-o), **caractérisé en ce qu'**entre au moins l'une des paires (44-i, 44-o) d'anneaux adjacents (44) du jeu d'anneaux (31) autre qu'une paire d'anneaux (44-i, 44-o) la plus intérieure radialement et qu'une paire d'anneaux (44-i, 44-o) la plus extérieure radialement de celui-ci, un espacement radial positif est appliqué nominalement lors de la fabrication en série, qui est supérieur au moins d'un facteur 2 à un espacement radial positif qui est appliqué nominalement lors de la fabrication en série entre une autre paire d'anneaux (44-i, 44-o) de celui-ci, c.-à-d. autre que lesdites paires d'anneaux (44-i, 44-o) la plus intérieure et la plus extérieure radialement.

2. Procédé de fabrication en série de courroies d'entraînement (3), chacune possédant un certain nombre d'éléments transversaux (32) qui sont disposés de façon coulissante sur un jeu d'anneaux (31) de la courroie d'entraînement (3), lequel jeu d'anneaux (31) comprend un certain nombre d'anneaux en acier flexible qui sont mutuellement empilés dans la direction radiale, dans lequel entre chaque paire (44-i, 44-o) de deux anneaux adjacents (44) dans le jeu d'anneaux (31), un espacement dans la direction radiale (RPC) est défini en tant que différence entre une longueur d'une circonférence interne (Ci) d'un anneau extérieur radial (44-o) d'une paire d'anneaux respective (44-i, 44-o) et une longueur d'une circonférence externe (Co) d'un anneau intérieur radial (44-i) de cette paire d'anneaux (44-i, 44-o), **caractérisé en ce qu'**entre au moins l'une des paires (44-i, 44-o) d'anneaux adjacents (44) du jeu d'anneaux (31) autre qu'une paire d'anneaux (44-i, 44-o) la plus intérieure radialement et qu'une paire d'anneaux (44-i, 44-o) la plus extérieure radialement de celui-ci, un espacement radial positif est appliqué nominalement lors de la fabrication en série, qui dépasse un espacement radial positif qui est appliqué nominalement lors de la fabrication en série entre une autre paire d'anneaux (44-i, 44-o) de celui-ci, c.-à-d. autre que lesdites paires d'anneaux (44-i, 44-o) la plus intérieure et la plus extérieure radialement d'au moins une fenêtre de tolérance qui est appliquée à ces valeurs d'espacement nominal respectives.

3. Procédé de fabrication en série de courroies d'entraînement (3) selon la revendication 1 ou 2, **caractérisé en ce que** le jeu d'anneaux (31) comprend un nombre N d'anneaux individuels (44) et **en ce que** les deux anneaux (44) de ladite au moins une paire (44-i, 44-o) d'anneaux adjacents (44) présentant l'espacement radial positif plus grand n'appartiennent pas aux 30 %, de préférence aux 40 % des N anneaux radiaux internes (44) du jeu d'anneaux (31).

4. Procédé de fabrication en série de courroies d'entraînement (3) selon la revendication 3, **caractérisé en ce que** ladite au moins une paire (44-i, 44-o) d'anneaux adjacents (44) présentant l'espacement radial positif plus grand inclut l'anneau intermédiaire (44) ou les anneaux intermédiaires (44) du jeu d'anneaux (31).

5. Procédé de fabrication en série de courroies d'entraînement (3) selon la revendication 3, **caractérisé en ce que** le jeu d'anneaux (31) comprend 12 anneaux individuels (44) et **en ce que** l'espacement radial positif plus grand est placé entre les 4^{ème} et 5^{ème} anneaux (44) et entre les 8^{ème} et 9^{ème} anneaux (44) du jeu d'anneaux (31) .
